# EUROPEAN PATENT APPLICATION

(11) **EP 1 640 782 A1**
(43) Date of publication of application: **29.03.2006**
(21) Application number: 05020358.7
(22) Date of filing: 19.09.2005
(51) Int. Cl.: G02B 27/14, H04N 9/097

(54) **Color separation optical system**

(30) Priority: 27.09.2004 JP 2004279250
(71) Applicant: Fujinon Corporation, Saitama-shi, Saitama (JP)
(72) Inventor: Naitoh, Shun-ichi, Saitama-shi Saitama (JP); Saita, Arihiro, Saitama-shi Saitama (JP); Sawahata, Yuichi, Saitama-shi Saitama (JP)
(74) Representative: Klunker . Schmitt-Nilson . Hirsch

(57) **Abstract**

A color-separation optical system (10) comprises: a plurality of prisms (11,12,13); and a plurality of wavelength-selection filters that are placed on prism surfaces (11b,12b) of said plurality of prisms and different in spectral characteristics from one another to selectively transmit or reflect light of wavelengths in respectively predetermined regions, wherein at least one of said plurality of prisms includes, on a light emitting surface (15a,16a) thereof, a trimming filter (15,16) comprising a light absorption layer containing a coloring matter and a coating layer (151,161) for control of spectral transmittance, and wherein the coating layer of the trimming filter is designed to have a spectral transmission characteristic that a half value on a rising edge of a spectral transmittance curve of the coating layer of the trimming filter is situated on a shorter wavelength side than a half value on a rising edge of a wavelength characteristic curve of light reaching the coating layer of the trimming filter.
The color-separation optical system aims to reduce the reflection of light returning from a solid-state image pickup device from the light emitting surface of said system, to control ghosts and flares.

## Description

### Background of the Invention

### 1. Field of the Invention

The present invention relates to a color separation optical system used in image pickup apparatus, such as television cameras and video camcorders, and more specifically, to a color separation optical system that is made up of two or more prisms andwavelength-selection filters used in combination therewith, and that separates incident light into beams of light in two or more different wavelength regions (e.g.,blue-region beamsoflight, green-region beams of light and red-region beams of light) depending on individual spectral characteristics of those combination optical elements, and emits the separated beams of light in each of the wavelength regions to a solid-state image pickup device.

### 2. Description of the Related Art

As color separation optical systems of the aforementioned kind, there have so far been known a wide variety of optical systems classified as Philips type or cross-dichroic type according to distinctions of the way in which two or more prisms are combined with optical filters for color separation.

In image pickup apparatus, such as television cameras, into which the color separation optical systems of the foregoing kind are incorporated, solid-state image pickup devices including CCDs have recently come to be used instead of image pickup tubes as image pickup devices for conversion of captured optical images into electric signals. And those devices have made it possible to easily carry out a difficult technique to apply to the cases of using image pickup tubes which tend to cause the so-called image burn-in problem, namely the technique of capturing highly bright subject images in a color separation optical system to perform color separation and then emitting light of each color as it is kept in a highly bright state onto the image pickup face of each image pickup device.

However, the image pickup face of a solid-state image pickup device has a high reflectivity mainly because it is provided with a coating film of metal. Therefore, there probably occur a phenomenon that high-intensity light striking the image pickup face is reflected by the image pickup face and returns as catoptric light to the light-emitting surface of a color separation optical system, and the catoptric light is reflected again by the light-emitting surface and strikes again the image pickup face of the solid-state image pickup device. Such a phenomenon, in which light bounces back and forth between the light-emitting surface of a color separation optical system and the image pickup face of a solid-state image pickup device, causes ghosts and flares to result in detrimental effect on video images.

So, methods of reducing ghosts and flares in the case of providing trimming filters including colored glass for elimination of undesired component light on light-emitting surfaces of a color separation optical system have been proposed (See, e.g., JP-A-2002-365413).

According to the art disclosed in JP-A-2002-365413, however, the spectral characteristics of colored glass depend on the thickness of the colored glass, and it is difficult to satisfy spectral characteristics required of the colored glass and mechanical restrictions on the colored glass thickness at the same time. On the other hand, even if the spectral characteristics required of the colored glass and the mechanical restrictions on the colored glass thickness could be satisfied at the same time, choices of ingredients usable for manufacturing colored glass were confined within narrow range and flexibilities in other physical properties of the colored glass, including a thermal expansion coefficient and a refractive index, were lessened.

In order to cope with such troubles, the present Inventors developed a color separation optical system equipped with a trimming filter having a coloring matter-containing light absorption layer instead of colored glass.

However, it was hard to say that the previous color separation optical system utilizing such a trimming filter was successful in sufficiently inhibiting the light reflected from an image pickup face of a solid-state image pickup device from being reflected again by the coating layer of the trimming filter.

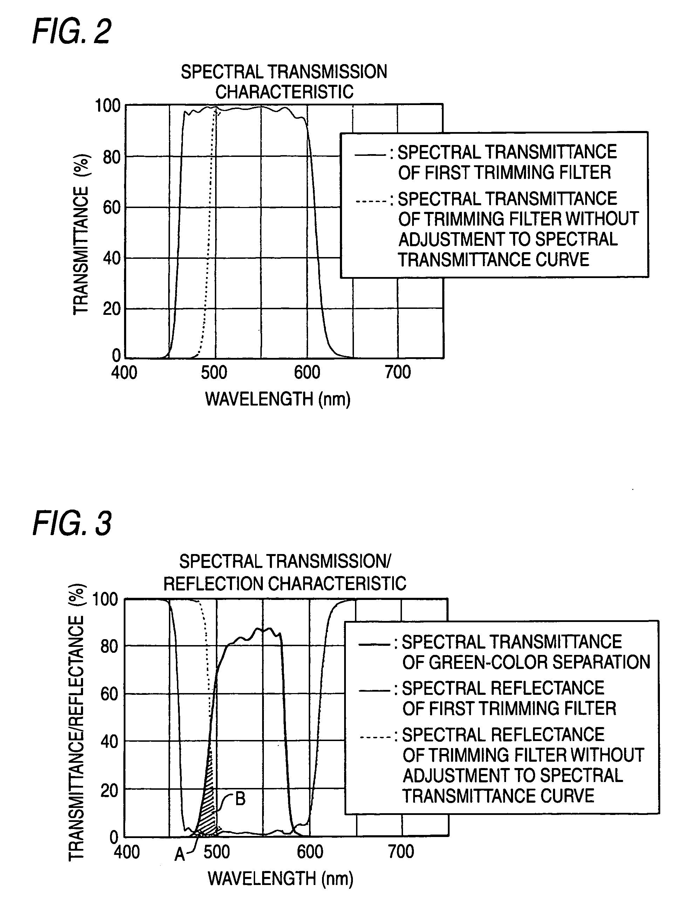

As shown in Fig. 3, in the portion surrounded by the reflection characteristic curve charting the spectral reflectance of a green-color trimming filter, the transmission characteristic curve charting the spectral transmittance of a prism (the spectral transmittance of a green-light-transmitting dichroic film, which is referred simply to as "spectral transmittance of a prism" hereinafter) and the X-axis, the quantity of light reflected off the coating layer of the green-color trimming filter amounts to the quantity obtained by multiplying the product of both characteristic curves by the reflectance of the image pickup face.

More specifically, in the color separation optical system using a trimming filter which receives no adjustment to its spectral transmittance curve, determination of the quantity of light reflected off the coating layer of a trimming filter is based on the area of the shaded portion B surrounded by the reflection characteristic curve charting the spectral reflectance of a trimming filter, the transmission characteristic curve charting the spectral transmittance of a prism and the X-axis.

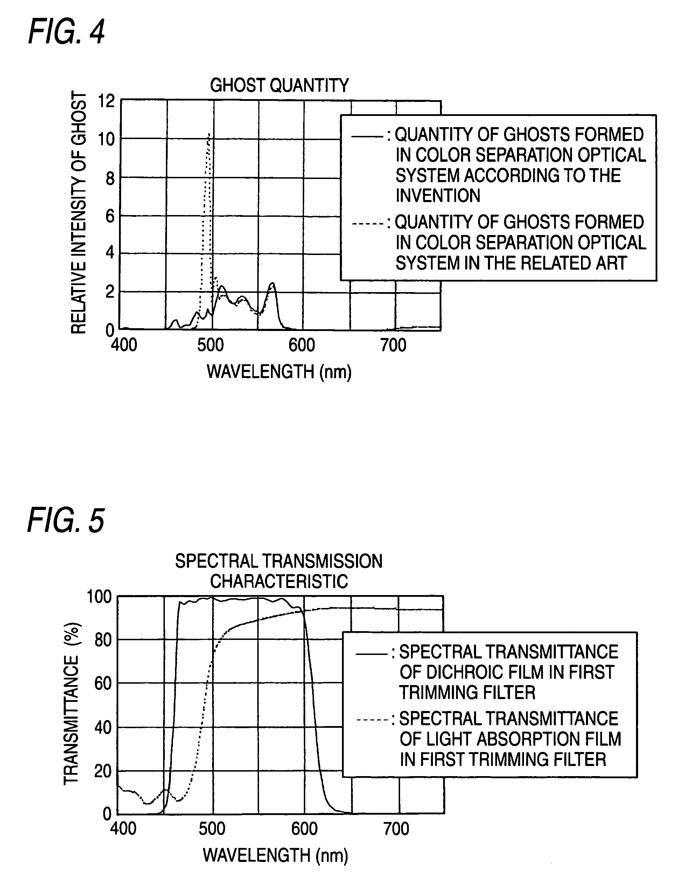

And determination of the ghost quantity is also based on the area of the shaded portion B, so the color separation optical system using the trimming filter receiving no adjustment to its spectral transmittance curve, as shown in Fig. 4, came to have an extremely increased quantity of ghost in the vicinity of 495 nm.

Further, as drawn in Fig. 5, the coloring matter used in the light absorption layer shows a spectral transmittance curve rising in the vicinity of, e.g., 463 nm because of its property, and only about 10 % reduction in the spectral transmittance on the wavelength side shorter than the rising portion (in the low-transmittance wavelength region) was made possible. In other words, it was impossible to achieve sufficient interception of light reflected off the coating layer by mere provision of a coloringmatter-containing light absorption layer for a trimming filter, and there were cases where satisfactory images were not obtained.

### Summary of the Invention

The invention is put forth in view of the circumstances described above, and aims to provide a color separation optical system equipped a trimming filter including a coating layer that enables reduction in reflection quantity of return light from a solid-state image pickup device, even when the trimming filter has a coloring matter-containing light absorption layer, thereby controlling ghosts and flares to form satisfactory video images.

In order to achieve the aforesaid aim, the present color-separation optical system comprising: a plurality of prisms; and a plurality of wavelength-selection filters that are placed on prism surfaces of said plurality of prisms and different in spectral characteristics from one another to selectively transmit or reflect light of wavelengths in respectively predetermined regions, wherein at least one of saidpluralityof prisms includes, on a light emitting surface thereof, a trimming filter comprising a light absorption layer containing a coloring matter and a coating layer for control of spectral transmittance, and wherein the coating layer of the trimming filter is designed to have a spectral transmission characteristic that a half value on a rising edge of a spectral transmittance curve of the coating layer of the trimming filter is situated on a shorter wavelength side than a half value on a rising edge of a wavelength characteristic curve of light reaching the coating layer of the trimming filter.

Alternatively, the color separation optical system comprises: a plurality of prisms; and a plurality of wavelength-selection filters that are placed on prism surfaces of saidpluralityof prisms and different in spectral characteristics from one another to selectively transmit or reflect light of wavelengths in respectively predetermined regions, wherein at least one of said plurality of prisms includes, on a light emitting surface thereof, a trimming filter comprising: a light absorption layer containing a coloring matter with a spectral characteristic represented by a first spectral transmittance curve rising in a first wavelength region; and a coating layer including a dichroic film with a second spectral characteristic represented by a second spectral transmittance curve rising in a second wavelength region, wherein the light absorption layer and the coating layer have spectral transmission characteristics controlled individually so that the first spectral transmittance curve and the second spectral transmittance curve overlap each other at least in portions of their individual low-transmittance wavelength regions.

Incidentally, the expression "at least portions of individual low-transmittance regions of the first spectral transmittance curve and the second spectral transmittance curve" refers to the domain on a shorter wavelength side than the vicinity of rising edges in the case where the first spectral transmittance curve and the second spectral transmittance curve rise on the short wavelength region side. More specifically, the foregoing expression refers to the domain on the shorter wavelength region side than the vicinity of 455 nm in the spectral transmission characteristic shown in Fig. 5.

Further, it is preferable in the present color separation optical system that the spectral transmission characteristic in the coating layer of the trimming filter is adjusted so that the half value on the rising edge of the spectral transmittance curve of the coating layer of the trimming filter is situated 15 nm to 70 nm away to the short wavelength side from the half value on the rising edge of the wavelength characteristic curve of light reaching the coating layer of the trimming filter.

According to the present color separation optical system, the half value on a rising edge of a spectral transmittance curve of the coating layer of the trimming filter is situated on a shorter wavelength side than the half value on a rising edge of a wavelength characteristic curve of light reaching the coating layer of the trimming filter.

Therefore, the half value on a falling edge of a spectral reflectance curve bearing a vertical-flip relationship with the spectral transmittance curve of the coating layer of a trimming filter comes to be situated on the shorter wavelength side than the half value on the rising edge of the wavelength characteristic curve of light reaching the coating layer of the trimming filter.

Accordingly, even when the light separated into a spectrum by the wavelength-selection filter of a prism and allowed to pass through the trimming filter is reflected by a solid-state image pickup device to become return light, the quantity of re-reflection of the return light from the solid-state image pickup device by the coating layer of the trimming filter becomes very small; as a result, satisfactory video images reduced in ghosts and flares can be obtained.

In Fig. 3, as mentioned above, the quantity of light reflected off the coating layer of the trimming filter amounts to the quantity obtained by multiplying the product of both characteristic curves by the reflectance of the image pickup face in the portion surrounded by the reflection characteristic curve showing the spectral reflectance from the coating layer of a trimming filter, the transmission characteristic curve showing the spectral transmittance of a prism and the X-axis. More specifically, in the color separation optical system using the present trimming filter, the quantity of light reflected off the coating layer of the trimming filter becomes a quantity based on the area of the shaded portion A surrounded by the reflection characteristic curve showing the spectral reflectance of the trimming filter, the transmission characteristic curve showing the spectral transmittance of a prism and the X-axis, which is smaller than the quantity based on the area of the shaded portion B in the case of using a trimming filter receiving no adjustment to its spectral transmittance curve.

Thus, as shown in Fig. 4, it can be understood that the quantity of light reflected off the coating layer of a trimming filter is controlled by setting spectral transmission characteristics of the coating layer of a trimming filter as specified in the invention to result in great reduction of the ghost quantity.

And what is more, the quantity of light reflected off the coating layer of a trimming filter can further be reduced by configuring the trimming filter so as to have a light absorption layer containing a coloring matter having a spectral characteristic represented by a first spectral transmittance curve rising in a first wavelength region and a coating layer including a dichroic film having a second spectral characteristic represented by a second spectral transmittance curve rising in a second wavelength region, and what is more, by adjusting the spectral transmission characteristics of the light absorption layer and the coating layer so that the first spectral transmittance curve and the second spectral transmittance curve overlap each other at least in portions of their individual low-transmittance wavelength regions; as a result, the ghost quantity can be exceedingly lessened. In other words, even when a great quantity of light strikes a color separation optical system or the coloring matter-containing light absorption layer is not enough to provide complete blockage of light reflected off the coating layer, depending on the property of the coloring matter, the reflected light can be intercepted by the dichroic film and thereby images of still better quality, especially color images of good quality, can be obtained.

Furthermore, where the specific numerical range in the present color separation optical system is concerned, the half value on the rising edge of the spectral transmittance curve of the coating layer of the trimming filter is adjusted to be situated 15 nm to 70 nm away to the short wavelength side from the half value on the rising edge of the wavelength characteristic curve of light reaching the coating layer of the trimming filter, and thereby the present color separation optical system can ensure good-quality images extenssively reduced in ghosts and flares when it is used in image pickup apparatus, notably in television cameras and video camcorders.

### Brief Description of the Drawings

Fig. 1 is a schematic configuration diagram showing a color separation optical system related to a mode of carrying out the invention;
Fig. 2 shows an explanatory graph charting a spectral characteristic of the coating layer in the first trimming filter;
Fig. 3 shows explanatory graphs charting spectral transmission/reflection characteristics of the color separation optical system (the coating layer in the first trimming filter) in a mode of carrying out the invention;
Fig. 4 shows an explanatory graph charting the quantity of ghosts formed in the color separation optical system (first trimming filter) in a mode of carrying out the invention; and
Fig. 5 shows explanatory graphs charting spectral transmission characteristics of a light absorption layer and a dichroic film in the color separation optical system (first trimming filter) in a mode of carrying out the invention.

### Detailed Description of the Invention

Embodiments of the present color separation optical system are illustrated below by reference to drawings.

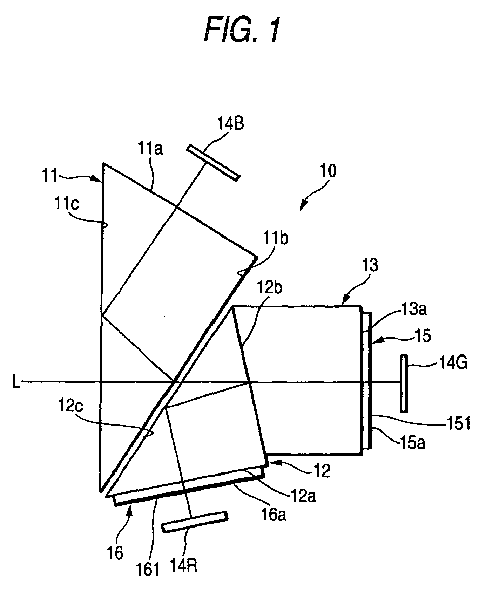

Fig. 1 is a schematic configuration diagram showing a color separation optical system related to a mode of carrying out the invention.

The color separation optical system concerning an embodiment of the invention is, as shown in Fig. 1, provided with a Philips-type color-separation prism 10 placed in a light path L of incident light carrying pictorial data of a subject (not shown in the diagram). The color-separation prism 10 is made up of three prisms, namely a blue color separation filter 11, a red color separation filter 12 and a green color separation filter 13.

In addition, a solid-state blue-color image pickup device 14B is arranged at a position facing onto the blue-light emitting surface 11a of the blue color separation prism 11, a solid-state red-color image pickup device 14R is arranged at a position facing onto the red-light emitting surface 12a of the red color separation prism 12, and a solid-state green-color image pickup device 14G is arranged at a position facing onto the green-light emitting surface 13a of the green color separation prism 13.

Further, the blue-color separation prism 11 has on the reflecting prism face 11b a blue-reflecting dichroic film that reflects onlybeams of light in a short-wavelength region including blue light (blue-region beams of light) and transmits beams of light in an intermediate-wavelength region including green light (green-region beams of light) and beams of light in a long-wavelength region including red light (red-region beams of light). Furthermore, the reflecting prism face 12b situated at the interface between the red-color separation prism 12 and the green-color separation prism 13 is provided with a green-transmitting/red-reflecting dichroic film having spectral characteristics that, among the beams of light sent into the red-color separation prism 12, it reflects visible red-region beams of light and transmits beams of light in the other region.

On the green light-emitting surface 13a of the green-color separation prism 13, a first trimming filter 15 is placed. The light-emitting surface 15a of the first trimming filter 15 is provided with a dichroic coat 151 for removal of undesired beams of light. This dichroic coat is designed so that the half value on a rising edge of its spectral transmittance curve is situated on a shorter wavelength side than a half value on a rising edge of a spectral transmittance curve of light reaching the coating layer 151 of the trimming filter 15.

On the red light-emitting surface 12a of the red-color separation prism 12, a second trimming filter 16 is placed. The light-emitting surface 16a of the second trimming filter 16 is provided with a dichroic coat 161 for removal of undesired beams of light. This dichroic coat is designed so that the half value on a rising edge of its spectral transmittance curve is situated on a shorter wavelength side than a half value on a rising edge of a spectral transmittance curve of light reaching the coating layer 161 of the trimming filter 16.

The blue-reflecting dichroic film, the red-reflecting dichroic film, the coating layer 151 and the coating layer 161 can be chosen from known dichroic films designed to have individually specified spectral characteristics, and each of them has a structure, e.g., such that alternating TiO₂ and SiO₂ coatings are stacked in multiple layers.

The first trimming filter 15 and the second trimming filter 16 each have a structure, e.g., such that a light absorption layer containing a coloring matter, such as pigment or dyestuff, a transparent glass plate and a dichroic film are laminated on the individual light-emitting surface sides of the prisms 13 and 12 in the order of mention. More specifically, the transparent glass plate is made of optical glass having a thickness of the order of 1 mm. On one side of the transparent glass plate, the dichroic film is formed by use of a vacuum evaporation method or a sputtering method and, on the other side, the light absorption layer is formed by a spin coating method or a vacuum evaporation method.

The color separation optical system in a mode of carrying out the invention can suppress ghosts and flares most effectively by virtue of having trimming filters 15 and 16 formed by arranging their constituent films in the aforementioned order. However, in forming the trimming filters 15 and 16, the foregoing arranging order of the constituent films can be changed by adjusting characteristics of the light absorption layer or the dichroic film. Needless to say, these two layers may be laminated on only one side of the transparent glass plate.

The light from a subject (not shown in the diagram) travels along a light path L, enters through the incidence face 11c of the blue-color separation prism 11 and arrives at the reflection face 11b of the blue-color separation prism. The prism's reflection face 11b reflects only blue-region beams of light, and green-region beams of light and red-region beams of light are allowed to pass through. The blue-region beams of light reflected from the prism's reflection face 11b undergo total internal reflection on the prism's incidence face 11c, and they are emitted from the blue-light emitting surface 11a and picked up by the solid-state blue-color image pickup device 14B.

As to the green-region beams of light and the red-region beams of light having passed through the reflection face 11b of the blue-color separation prism 11, the red-region beams of light are reflected by a prism's reflection face 12a, while the green-region beams of light are allowed to pass through. The green-region beams of light having passed through the face 12b go through the green-color separation prism 13 and further through the coating layer 151 of the first trimming filter 15, and are emitted from the light-emitting surface 15a and picked up by the solid-state green-color image pickup device 14G.

The red-region beams of light reflected from the reflection face 12b of the red-color separation prism 12 undergo total internal reflection on the total internal reflection face 12c of the red-color separation prism 12 because an air gap is provided between the blue-color separation prism 11 and the red-color separation prism 12, and they are emitted from the light-emitting surface 16a via the coating layer 161 of the second trimming filter 16 and picked up by the solid-state red-color image pickup device 14R.

Then, spectral characteristics of the color separation optical system in a mode of carrying out the invention are illustrated by reference to Fig. 2 to Fig. 5.

In Fig. 2 is drawn an explanatory graph showing a spectral characteristic of the coating layer of the first trimming filter 15, in Fig. 3 are drawn explanatory graphs showing spectral characteristics of the color separation optical system in a mode of carrying out the invention, in Fig. 4 is drawn an explanatory graph showing the quantity of ghosts formed in the color separation optical system in a mode of carrying out the invention, and in Fig. 5 are drawn explanatory graphs showing spectral transmission characteristics of a light absorption layer and a dichroic film in the color separation optical system in a mode of carrying out the invention.

Incidentally, the wording "spectral transmittance or spectral reflectance of a trimming filter" as used in Fig.2 and Fig. 3 refers to the spectral transmittance or the spectral reflectance of the coating layer in a trimming filter.

In the color separation optical system in a mode of carrying out the invention, as shown in Fig. 2, the first trimming filter 15 is adjusted to have a half value on a rising edge of its spectral transmittance curve in the vicinity of 460 nm and to have a half value on a falling edge of its spectral transmittance curve in the vicinity of 610 nm. Accordingly, the spectral reflectance curve standing in vertical-flip relationship with the spectral transmittance curve has a half value on its falling edge in the vicinity of 460 nm.

Further, the color separation optical system in a mode of carrying out the invention is designed so that the transmittance curve of the light reaching the coating layer 151 of the trimming filter 15 has a half value on its rising edge in the vicinity of 495 nm and a half value on its falling edge in the vicinity of 573 nm.

Furthermore, the dye used for the light absorption layer in the first trimming filter 15 has a characteristic shown, e.g., in Fig. 5 such that the spectral transmittance curve thereof rises in the vicinity of 463 nm and the transmittances on the wavelength side shorter than the rising wavelength (in the low-transmittance wavelength region) are of the order of 6% to 16 %.

Therefore, a dichroic film having a spectral characteristic adjusted to have spectral transmittances on the order of 0 % in the wavelength region shorter than the vicinity of 428 nm is used in the coating layer 151 of the first trimming filter 15, and thereby the quantity of light reflected off the coating layer 151 of the first trimming filter 15 is suppressed in the low-transmittance wavelength region.

In the color separation optical system in a mode of carrying out the invention, the quantity of light re-reflected off the coating layer 151 of the first trimming filter 15 amounts to the value obtained by multiplying the spectral reflectance of the coating layer 151 of the first trimming filter 15 by the spectral transmittance of the green component of the color separation prism 10 by the spectral reflectance of the solid-state green-color image pickup device 14G. More specifically, the quantity of light re-reflected off the coating layer 151 of the first trimming filter 15 amounts to the quantity depending on the area of the shaded portion A as shown in Fig. 3, which is surrounded by the reflection characteristic curve (thin solid line) showing the spectral reflectance of the coating layer 151 of the first trimming filter 15, the transmission characteristic curve (thick solid line) showing the spectral transmittance of the green component of the color-separation prism 10 and the X-axis. Incidentally, the spectral reflectance curve of the solid-state green-color image pickup device 14G is omitted from Fig. 3 for the sake of convenience.

On the other hand, the trimming filter's coating layer without adjustment to its spectral transmittance curve is designed to have a half value on a rising edge of the spectral transmittance curve in the vicinity of 494 nm as shown in Fig. 3. Therefore, the spectral reflectance curve standing in vertical-flip relationship with the spectral transmittance curve has a half value on its falling edge in the vicinity of 494 nm. As a result, the area of the shaded portion B surrounded by the reflection characteristic curve (broken line) showing the spectral reflectance of the trimming filter's coating layer, the transmission characteristic curve (thick solid line) showing the spectral transmittance of the green component of the color separation prism 10 and the X-axis is larger as compared with the counterpart in the color separation optical system in a mode of carrying out the invention.

As mentioned above, the color separation optical system in a mode of carrying out the invention can be reduced in the area of the shaded portion A, compared relatively with those in the related art. Thus, most of return beams of light from the solid-state green-color image pickup device 14G pass through the coating layer 151 of the first trimming filter 15, and the quantity of light re-reflected off the coating layer 151 of the first trimming filter 15 can be reduced.

Consequently, as shown in Fig. 4, the trimming filter' s coating layer without adjustment to its spectral transmittance curve causes an excessive increase of ghost quantity in the vicinity of 495 nm in contrast to the color separation optical system in a mode of carrying out the invention. Since the color separation optical system in a mode of carrying out the invention is free of such an excessive increase, it is successful in reducing the ghost quantity as a whole.

Likewise, the coating layer 161 of the second trimming filter 16 is also designed to have a spectral transmission characteristic that a half value on a rising edge of its spectral transmittance curve is situated on the shorter wavelength side than a half value on a rising edge of a spectral transmittance curve of the red component of the color separation prism 10.

On this account, most of return beams of light from the solid-state red-color image pickup device 14R pass through the coating layer 161 of the second trimming filter 16, and the quantity of light re-reflected off the coating layer 161 of the second trimming filter 16 can be lessened; as a result, the quantity of ghosts formed by red-region beams of light can also be reduced.

Accordingly, the color separation optical system in a mode of carrying out the invention is reduced in the quantity of light reflected off the coating layer 161 of the second trimming filter 16, compared with color separation optical systems in the related art, so substantial control of ghosts and flares can be achieved.

Incidentally, the half values on the rising edges of the spectral transmittance curves of the coating layer 151 of the trimming filter 15 and the coating layer 161 of the trimming filter 16 should not be construed as being limited to the values described above, but the invention can be carried out under conditions changed as appropriate as long as those half values are adjusted to be situated on the shorter wavelength sides than half values on rising edges of wavelength characteristic curves of light beams reaching the coating layer 151 of the trimming filter 15 and the coating layer 161 of the trimming filter 16, respectively. And it is especially preferable that the half values on the rising edges of the spectral transmittance curves of the coating layer 151 of the trimming filter 15 and the coating layer 161 of the trimming filter 16 are situated 15 nm to 70 nm away to the short wavelength side from the half values on the rising edge of the wavelength characteristic curves of light beams reaching the coating layer 151 of the trimming filter 15 and the coating layer 161 of the trimming filter 16, respectively.

In the foregoing mode of carrying out the invention, the first trimming filter 15 is placed on the green-light emission face 13a of the green-color separation prism 13 and the second trimming filter 16 is placed on the red-light emission face 12a of the red-color separation prism 12. However, only either the green-light emission face 13a of the green-color separation prism 13 or the red-light emission face 12a of the red-color separation prism 12 may be equipped with a trimming filter according to the invention.

Although the color separation prism of Philips type is used in the foregoing mode of carrying out the invention, the invention is applicable to other color separation prisms, such as a color separation prism of cross-dichroic type and a color separation prism with four or two CCDs.

## Claims

1. A color-separation optical system comprising:
a plurality of prisms; and
a plurality of wavelength-selection filters that are placed on prism surfaces of said plurality of prisms and different in spectral characteristics from one another to selectively transmit or reflect light of wavelengths in respectively predetermined regions,
wherein at least one of saidpluralityof prisms includes, on a light emitting surface thereof, a trimming filter comprising a light absorption layer containing a coloring matter and a coating layer for control of spectral transmittance, and
wherein the coating layer of the trimming filter is designed to have a spectral transmission characteristic that a half value on a rising edge of a spectral transmittance curve of the coating layer of the trimming filter is situated on a shorter wavelength side than a half value on a rising edge of a wavelength characteristic curve of light reaching the coating layer of the trimming filter.

2. A color separation optical system comprising:
a plurality of prisms; and
a plurality of wavelength-selection filters that are placed on prism surfaces of said plurality of prisms and different in spectral characteristics from one another to selectively transmit or reflect light of wavelengths in respectively predetermined regions,
wherein at least one of said plurality of prisms includes, on a light emitting surface thereof, a trimming filter comprising: a light absorption layer containing a coloring matter with a spectral characteristic represented by a first spectral transmittance curve rising in a first wavelength region; and a coating layer including a dichroic film with a second spectral characteristic represented by a second spectral transmittance curve rising in a second wavelength region,
wherein the light absorption layer and the coating layer have spectral transmission characteristics controlled individually so that the first spectral transmittance curve and the second spectral transmittance curve overlap each other at least in portions of their individual low-transmittance wavelength regions.

3. A color separation optical system as described in claim 1 or 2,
wherein the spectral transmission characteristic of the coating layer of the trimming filter is adjusted so that the half value on the rising edge of the spectral transmittance curve of the coating layer of the trimming filter is situated 15 nm to 70 nm away to the short wavelength side from the half value on the rising edge of the wavelength characteristic curve of light reaching the coating layer of the trimming filter.
